# FASCICULE DE BREVET EUROPEEN

(11) **EP 1 388 001 B1**
(45) Date de publication et mention de la délivrance du brevet: **03.08.2005**
(21) Numéro de dépôt: 02738207.6
(22) Date de dépôt: 29.04.2002
(51) Int. Cl.: G01F 13/00

(54) **DISPOSITIF DOSEUR DE POUDRES**
PULVERDOSIERVORRICHTUNG
POWDER DOSING DEVICE

(30) Priorité: 07.05.2001 FR 0106090
(43) Date de publication de la demande: 11.02.2004
(73) Titulaire: Mettler-Toledo Flexilab SAS, 77700 Serris (FR)
(72) Inventeur: FONTAINE, Ivan-William, F-94130 Nogent sur marne (FR); HERBELIN, Patrick, F-77515 Pommeuse (FR)
(74) Mandataire: Touati, Catherine
(86) Numéro de dépôt international: PCT/FR2002/001484
(87) Numéro de publication internationale: WO 2002/090896

(56) Documents cités:
- DE-C- 3 520 240
- DE-U- 8 914 389
- FR-A- 2 672 035
- FR-A- 2 775 958
- US-A- 2 593 803
- US-A- 5 713 494
- US-B1- 6 182 655

## Description

La présente invention concerne un dispositif doseur de poudres.

Plus particulièrement, la présente invention concerne un dispositif doseur comprenant un récipient à poudre et un bouchon doseur permettant de distribuer avec une précision élevée de petites masses de poudres.

Dans l'industrie chimique et pharmaceutique, il est régulièrement nécessaire de réaliser des pesées précises de réactifs ou de produits en poudre, en particulier à partir d'une chimiothèque. Lors de la conduite de tests sur un nombre important de produits en poudre, les pesées successives deviennent particulièrement fastidieuses. Celles-ci peuvent représenter un risque de contamination pour le personnel manipulateur ou encore occasionner la dégradation du produit.

On a donc cherché à automatiser ces pesées pour permettre la distribution de masses définies d'une grande variété de poudres, avec la précision désirée. Un autre objectif a été de préserver le personnel manipulateur des contaminations éventuelles tout en préservant le produit d'une quelconque dégradation.

La demande de brevet FR 2 672 035 décrit un dispositif permettant la distribution de masses définies de poudres. Ce dispositif est constitué d'un flacon à poudre et d'un bouchon doseur. Le bouchon doseur comprend un corps conique cylindrique ayant une première face d'extrémité en communication avec le flacon et une seconde face d'extrémité délimitant avec la première face d'extrémité une trémie conique évasée vers la première face d'extrémité. La trémie alimente une vis sans fin. Le corps du bouchon comprend une ouverture positionnée sur le côté du corps du bouchon, dans l'axe et à l'extrémité de la vis sans fin. Lorsqu'on renverse le flacon, la poudre vient remplir la trémie. Par rotation de la vis sans fin, on distribue par l'ouverture des quantités contrôlées de poudre.

Le dispositif est tout à fait adéquat pour délivrer des masses de produits à partir de 5 mg environ à 8 mg environ et au-delà, avec une précision de l'ordre de 1 mg.

Un autre dispositif du même type est décrit dans la demande de brevet FR 2 775 958. Le principe de l'utilisation d'un bouchon muni d'une vis sans fin avec une ouverture de distribution à l'extrémité de la vis sans fin est par ailleurs déjà évoqué dans un document aussi ancien que le brevet US 2,593,803.

Le modèle d'utilité allemand No. 89 14 389 U au nom de FINK-CHEMIE GmbH décrit un dispositif pour le dosage de matériaux coulants, notamment de poudres. Ce dispositif est équipé d'une entrée alimentant une vis sans fin en poudre. Cette vis sans fin achemine la poudre vers une ouverture de distribution aménagée dans la surface inférieure du dispositif.

Ce dispositif ne semble toutefois pas un bouchon doseur pour le dosage de précision de faibles quantités de poudres de types variés, comme l'exige en particulier une utilisation en chimiothèque. Ce dispositif semble en revanche adapté pour le dosage de grandes masses de poudres où la précision a une importance moindre. Ce modèle d'utilité ne fait d'ailleurs aucunement mention de quelconques exigences de précision de dosage.

Les exigences de l'industrie chimique et pharmaceutique imposent désormais des pesées pouvant aller jusqu'à 1 à 2 mg avec des précisions qui peuvent être de l'ordre de 0,1 à 0,2 mg, soit bien au-delà des performances des distributeurs de poudre de l'art antérieur.

La Demanderesse a découvert de façon surprenante et a mis au point un nouveau dispositif doseur de poudre qui permet de satisfaire les nouvelles exigences imposées par l'industrie chimique et pharmaceutique pour la pesée de produit.

Un tel dispositif doseur est particulièrement adapté pour l'aliquotage à partir d'une chimiothèque ou pour le fractionnement à partir de flacons de réserve. Il pourra être utilisé avec des poudres ou petits solides de granulométries et apparences très différentes, par exemple du talc, du lactose, de l'amidon de maïs ou du sable. Dans cette demande de brevet, le terme « poudre » désigne des poudres ou petits solides, tels que ceux exemplifiés ci-dessus, d'une granulométrie inférieure au pas de vis et au rayon de la vis sans fin.

La présente demande de brevet a donc pour objet un bouchon doseur comprenant un corps ayant une première face d'extrémité adaptée pour être mise en communication avec un récipient à poudre, une seconde face d'extrémité délimitant avec la première face d'extrémité au moins une trémie évasée vers la première face d'extrémité, la trémie alimentant au moins une vis sans fin, et au moins une ouverture. Le bouchon selon l'invention est caractérisé en ce que l'ouverture est positionnée sur la seconde face d'extrémité, en communication avec la vis sans fin.

La présente demande de brevet a également pour objet un dispositif doseur comprenant un bouchon selon l'invention et un récipient à poudres.

Sans pour autant être liée par une quelconque théorie, la Demanderesse a constaté qu'en plaçant l'ouverture de distribution dans la seconde face d'extrémité du corps du bouchon, plutôt que dans le côté du corps du bouchon, dans l'axe et à l'extrémité de la vis sans fin, on maîtrise mieux la coulée et on a un degré de contrôle de l'asservissement beaucoup plus fin. Cela permet de doser des quantités de poudres bien inférieures, et ce avec une précision plus élevée.

Plus précisément, le dispositif comprenant le bouchon selon l'invention permet de doser des masses de poudres notamment inférieures à 5 mg, en particulier inférieures à 3 mg, voire même de 1 à 2 mg environ. La précision de la pesée peut être inférieure à 1 mg, de préférence inférieure à 0,5 mg, de préférence encore de l'ordre de 0,1 à 0,2 mg, pour la majeure partie des pesées (les pesées écartées sont les pesées pour lesquelles la précision recherchée n'a pas été atteinte). La majeure partie des pesées est définie comme étant plus de 50 % des pesées effectuées, de préférence au moins 75 %, de préférence encore au moins 85 % des pesées. Le chiffre maximum de 100 % des pesées pourra même être atteint dans certains cas.

Outre la possibilité de peser des masses plus faibles, avec une précision améliorée, le dispositif selon l'invention muni du bouchon doseur selon l'invention permet également des gains de temps importants, et une meilleure préservation des poudres à prélever en limitant leur manipulation.

Le dispositif selon l'invention peut être couplé à un système automatique, géré par un logiciel informatique, afin de faciliter sa commande et d'automatiser entièrement les pesées.

Lors de la distribution, il est particulièrement indiqué de tapoter ou de faire vibrer le dispositif, ceci afin de décolmater la poudre si cela est nécessaire ou d'éliminer les effets de voûte ou de cheminée se formant dans le bouchon doseur ou le récipient. Ceci permet de faciliter l'alimentation de la vis sans fin par la trémie. La poudre peut aussi être distribuée en faisant vibrer ou en tapotant le dispositif, que la vis soit en rotation ou non. En effet, le fait de faire vibrer ou de tapoter le dispositif permet de faire progresser la poudre le long du pas de vis de la vis sans fin, et ce jusqu' à l'ouverture. Le dispositif selon l'invention comprendra donc avantageusement un dispositif favorisant la distribution de la poudre, notamment par tapotage grâce par exemple un doigt mobile et escamotable qui peut venir frapper le bouchon doseur ou le récipient communiquant avec ce dernier, par exemple 4 fois par seconde, ou/et par vibration grâce en particulier à une fourchette de maintien du dispositif.

Le dispositif selon l'invention peut aussi être équipé d'un agitateur, placé dans la trémie. Cet agitateur aura principalement deux fonctions permettant de moduler le dosage.

La première fonction de l'agitateur est celle d'éliminer les effets de voûtes dans la trémie qui nuisent à la bonne distribution de la poudre.

La deuxième fonction de l'agitateur est celle d'alimenter, voire même de gaver la vis sans fin.

Cet agitateur peut avantageusement être un élément rotatif autour d'un axe sensiblement perpendiculaire à la première et/ou la deuxième face d'extrémité. On entend par axe sensiblement perpendiculaire, un axe coupant la première et/ou la seconde face d'extrémité avec un angle de 90° +/- 45°.

L'agitateur peut être entraîné au moyen d'un moteur relié ou non à un ordinateur contrôlant sa rotation selon les besoins du dosage. Dans les modes de réalisation préférés, l'agitateur est choisi dans le groupe constitué par une vis sans fin, un foret ou une barre équipée de pales.

Lorsque le dispositif doseur de poudres n'est pas utilisé, le bouchon peut être complètement ou partiellement recouvert d'une cape, qui ferme l'ouverture et empêche ainsi la contamination par la poussière ou l'air ambiant.

Le récipient à poudre peut avoir n'importe quelle taille ou forme, et peut être construit en tout matériau thermiquement stable dans les conditions de stockage et d'utilisation et chimiquement inerte vis à vis des poudres qu'il contient. Il pourra s'agir en particulier de tout pilulier ou flacon habituellement utilisé dans les chimiothèques. A titre d'exemple, on pourra citer les piluliers en verre, par exemple avec col du type BV18 Pharma. L'homme de l'art pourra aisément adapter les dimensions du bouchon doseur au récipient utilisé, ou prévoir une pièce intermédiaire pour adapter un bouchon donné à un récipient donné. Ainsi, le bouchon doseur selon l'invention pourra être adapté à tout pilulier qui serait en possession de l'utilisateur.

Le bouchon selon l'invention peut être équipé d'un moyen assurant l'étanchéité entre le bouchon et le récipient lors de l'utilisation. Un tel moyen peut être une lèvre, par exemple une rondelle.

La première face d'extrémité du corps du bouchon est ouverte en tout ou partie pour permettre la communication entre, d'une part, le récipient contenant la poudre à distribuer, et, d'autre part, la trémie.

La fixation de la première face d'extrémité avec le récipient contenant la poudre peut être réalisée par tout moyen connu, comme par exemple grâce à un filetage, un clipsage, un collage, un moulage, de préférence grâce à un filetage.

Le corps du bouchon peut présenter un détrompage sur sa surface extérieure, afin de permettre le positionnement du bouchon lors de son utilisation dans un système automatique.

La vis sans fin traverse de préférence le bouchon doseur selon un axe faisant un angle sensiblement égal à 90° +/- 45° par rapport à l'axe central vertical coupant les première et seconde surface d'extrémité du bouchon. De préférence encore, cet angle est égal à 90°.

Le diamètre et le pas de vis de la vis sans fin peuvent être modifiés en fonction du type de poudre à distribuer. La vis sans fin a de préférence un diamètre voisin de son pas. Elle peut transporter de la poudre dans un sens ou dans l'autre, selon le sens de rotation appliqué à la vis. On définit le sens de distribution de la vis comme étant celui permettant le transport du produit désiré vers l'ouverture de distribution.

La vis sans fin peut comprendre aussi un organe de transmission adapté pour permettre sa mise en rotation. Cet organe de transmission peut être par exemple un évidemment à une extrémité de la vis sans fin et dans son axe. De préférence, cet évidemment est cruciforme. Si la distribution de produit se fait uniquement par vibration ou tapotage, l'organe de transmission peut être absent.

Le dispositif, éventuellement par l'intermédiaire de l'organe de transmission de la vis sans fin, peut être couplé à un dispositif permettant de contrôler et de faire varier l'angle d'incrément de rotation ou la vitesse de rotation de la vis sans fin par action d'un mouvement rotatif sur l'organe de transmission ou la force ou la fréquence de vibration ou tapotage. Dans ces conditions, le mouvement de la vis sans fin et/ou la vibration ou tapotage du dispositif sont asservis aux indications de pesée de la balance par l'intermédiaire d'un signal externe, et il sont arrêtés lorsque la masse de poudre désirée est atteinte.

Le dispositif selon l'invention peut aussi être couplé à un ou plusieurs dispositifs anti-électrostatiques, générant un champ électrique favorisant la distribution de la poudre. Sans pour autant être lié par une quelconque théorie, la Demanderesse pense que les poudres à doser sont naturellement chargées ou que la friction des grains du produit à doser sur les éléments du dispositif génère des espèces chargées. Les charges induisent des forces conduisant notamment à l'agglomération des grains entre eux ou à une aimantation des grains au contact des éléments du dispositif. De préférence, le dispositif selon l'invention est ainsi équipé d'au moins un dispositif anti-électrostatique placé sur le bouchon à la sortie de l'ouverture de distribution et génèrent un champ électrique qui permet de canaliser le mouvement des particules. Afin de couvrir toute l'ouverture de distribution, on utilisera de préférence deux dispositifs anti-électrostatiques. Un dispositif anti-électrostatique peut être une sonde ionisante en pointe, générant un champ électrique de 4 kV par exemple.

Le bouchon doseur peut avoir n'importe quelle taille ou forme. Il peut notamment avoir la forme d'un cône, de section circulaire ou non, délimité par une paroi, une première et une seconde face d'extrémité. Ces faces d'extrémité peuvent être perpendiculaires à l'axe du cône ou non. De même le bouchon peut être en n'importe quel matériau thermiquement stable dans les conditions d'utilisation et de stockage et chimiquement inerte vis à vis des poudres à doser. Il pourra s'agir en particulier d'un matériau polymère tel que le polyéthylène, le polypropylène, les polymères fluorés, par exemple le polytétrafluoréthylène (teflon©). Chaque pièce pourra être moulée. Dans un mode de réalisation préféré, le corps du bouchon est dans un matériau différent de celui de la vis pour limiter l'usure par friction de deux matériaux identiques.

L'ouverture positionnée sur la seconde face d'extrémité du bouchon doseur peut présenter une forme quelconque, notamment une forme de triangle, de quadrilatère, de cercle, d'ellipse, ou encore toute autre forme.

Dans un mode préféré de réalisation du bouchon et du dispositif selon l'invention, l'ouverture est en forme de triangle centré sur l'axe de la vis sans fin et ayant un angle s'ouvrant dans le sens de distribution de la vis. La forme en triangle permet de distribuer une large gamme de poudres ayant des granulométries très variables. A titre indicatif et non limitatif, les poudres généralement dosées grâce à cet appareil sont constituées de particules dont le diamètre est inférieur ou égal à 100 µm.

Dans un autre mode de réalisation préféré, l'ouverture est un triangle centré sur l'axe de la vis sans fin et ayant un angle s'ouvrant dans le sens de distribution de la vis, réalisé dans une épaisseur moindre que la pleine épaisseur de la seconde face d'extrémité, vers l'intérieur du bouchon.

Selon un mode particulier de réalisation de l'invention, le bouchon doseur (1) comprend un moyen d'obturation de tout ou partie de l'ouverture (12) permettant ainsi la modification de la surface de l'ouverture, avant, pendant ou après le fonctionnement du bouchon doseur.

Ce moyen d'obturation peut par exemple comprendre au moins un élément recouvrant tout ou partie de la seconde face d'extrémité (5). Ce moyen d'obturation est monté mobile par rapport à la seconde face d'extrémité, que ce soit en pivot ou en translation. Le moyen d'obturation comprend un trou traversant pouvant être mis en regard de l'ouverture (12). A titre d'exemples de tels moyens d'obturation, on peut citer un obturateur à diaphragme du type appareil photographique, ou encore par un obturateur à tiroir, de types connus de l'homme du métier.

Le distributeur doseur de poudre selon l'invention fonctionne de la manière suivante :
- le récipient contenant la poudre à distribuer et muni du bouchon doseur est placé verticalement, la seconde face d'extrémité et l'ouverture de distribution étant dirigées vers le bas,
- la vis sans fin est alimentée en poudre par la trémie et est mise en rotation sur son axe longitudinal par tout système approprié dans un sens de rotation permettant la distribution de la poudre par l'ouverture. Alternativement, la distribution se fait par vibration ou tapotage du dispositif. Le récipient recevant la poudre peut être placé sur le plateau d'une balance afin de contrôler en continu la distribution,
- dès que la masse désirée de poudre a été distribuée, la rotation de la vis sans fin ou/et la vibration ou tapotage sont arrêtés,
- le dispositif est prêt pour une nouvelle opération : il peut être rangé, ou être utilisé pour distribuer une nouvelle dose identique ou différente.

Lorsque qu'un dosage est terminé, la vis sans fin est de préférence mise en rotation dans le sens contraire à celui induisant la distribution, de manière à ramener la poudre se trouvant proche de l'extrémité de la vis sans fin vers la trémie. Simultanément, le dispositif doseur est retourné tout en maintenant la rotation de la vis sans fin. Le bouchon doseur est éventuellement encapuchonné à l'aide de la cape prévue à cet effet. Il en résulte que la poudre restant dans la vis sans fin est réintroduite dans le récipient contenant la poudre par la trémie et est isolée de la contamination.

Si le distributeur doseur comprend au moins un dispositif anti-électrostatique, ledit dispositif anti-électrostatique peut rester en fonctionnement en permanence pendant toute la durée d'utilisation du distributeur doseur (par exemple 100 dosages successifs).

L'invention va maintenant être décrite plus en détail grâce aux figures.
La figure 1 est une vue en coupe et de côté d'un mode de réalisation du dispositif doseur selon l'invention.
La figure 2 est une vue en coupe et de côté selon un autre angle du mode de réalisation du dispositif doseur selon la figure 1.
La figure 3 est une vue éclatée de côté du mode de réalisation du dispositif doseur représenté sur la figure 1.
La figure 4 est une vue de la seconde face d'extrémité du bouchon du dispositif doseur du mode de réalisation particulier du dispositif doseur de la figure 1.
Les figures 5a, 5b, 5c sont des vues en coupe et de côté du bouchon doseur de poudres en fonctionnement.

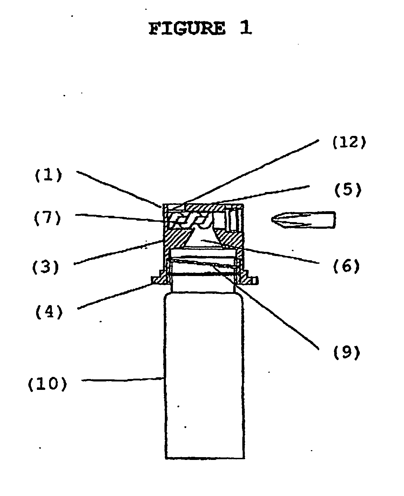

Sur la figure 1, est représenté un mode de réalisation d'un dispositif doseur lorsqu'il n'est pas en fonctionnement. Dans ce mode de réalisation particulier, le bouchon (1) est un cylindre. Le corps (3) présente une première face d'extrémité (4) et une seconde face d'extrémité (5) délimitant avec la première face d'extrémité une trémie conique (6) évasée vers la première face d'extrémité. La trémie (6) alimente la vis sans fin (7) dont l'axe est représenté dans le plan de la feuille. La vis sans fin communique avec une ouverture (12). La première face d'extrémité (4) est munie d'un filetage (9) et est vissée sur un récipient à poudre (10).

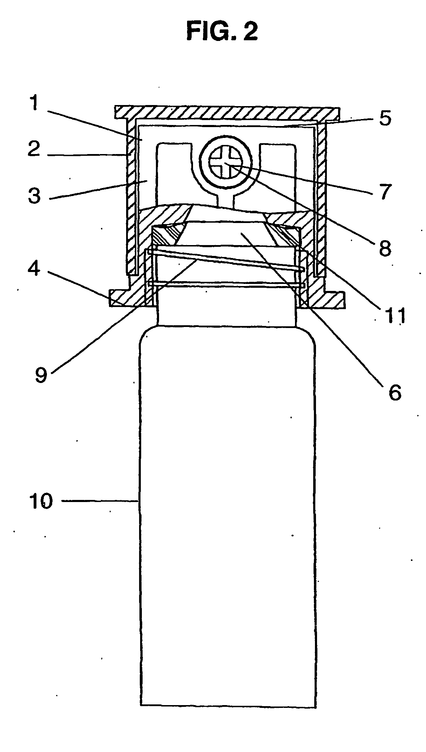

Sur la figure 2, est représenté le dispositif doseur de la figure 1, selon un autre angle. Les références numériques ont les mêmes significations. La vis sans fin (7) est représentée dans un axe perpendiculaire à la feuille et est munie d'un organe de transmission cruciforme (8) adapté pour permettre sa mise en rotation. Une rondelle (11) assure l'étanchéité lors de la fixation du bouchon sur le récipient (10). Le bouchon doseur est muni d'une cape (2), qui est un cylindre adapté pour recouvrir le corps (3) et empêcher la contamination de la poudre ou de l'appareillage par la poussière ou l'air ambiant.

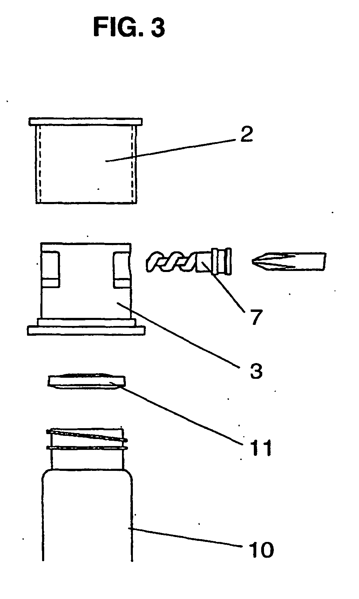

Sur la figure 3, sont représentés en éclaté la cape (2), le corps (3) du bouchon doseur de la figure 1, la vis sans fin (7), la rondelle d'étanchéité (11) et le récipient (10).

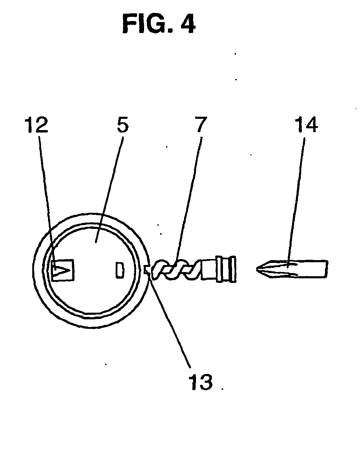

Sur la figure 4, la seconde face d'extrémité (5) du bouchon doseur comprend l'ouverture de distribution (12) en triangle, centré sur l'axe de la vis sans fin et présentant un angle s'ouvrant dans le sens de distribution de la vis sans fin (7). Dans ce mode de réalisation, un premier évidemment rectangulaire est réalisé dans une partie de l'épaisseur de la seconde face d'extrémité. L'ouverture en triangle est réalisée dans l'épaisseur restante, vers l'intérieur du bouchon. Le détrompage (13) est une encoche réalisée sur la surface extérieure du corps (3). Le dispositif permettant de contrôler et de faire varier l'angle d'incrément de rotation ou la vitesse de rotation de la vis sans fin est une pointe cruciforme (14) adaptée à l'organe de transmission cruciforme de la vis sans fin.

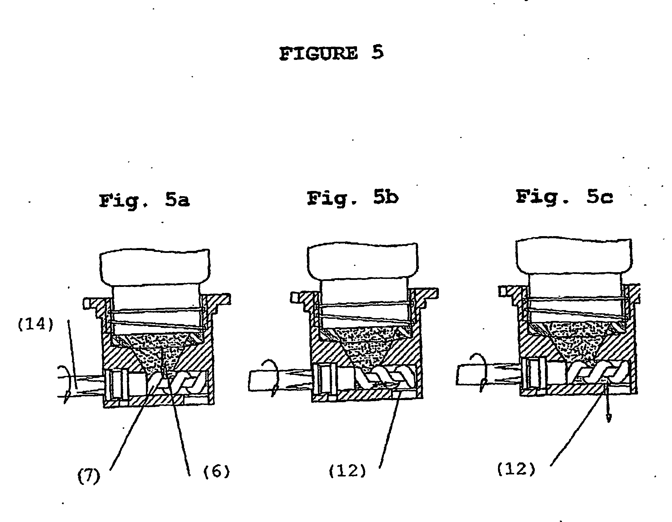

Les figures 5a, 5b, 5c illustrent le fonctionnement d'un bouchon doseur. Comme il a été exposé plus haut, en fonctionnement, la seconde face d'extrémité et l'ouverture du bouchon sont dirigées vers le bas. Sur la figure 5a, la pointe cruciforme (14) entraîne dans un mouvement rotatif la vis sans fin (7) sur son axe qui est alimentée en poudre par la trémie (6). Sur la figure 5b, la poudre est entraînée par la vis sans fin, dans le sens de distribution, vers l'ouverture en triangle (12). Sur la figure 5c, la poudre est distribuée par l'ouverture de distribution (12).

### Exemple

Un bouchon doseur selon l'invention, adapté aux flacons standards ayant un col du type BV18 Pharma, comprenant un corps moulé en polypropylène et une vis sans fin en polyéthylène ayant un diamètre et un pas de vis tous deux voisin de 5 mm est utilisé pour doser indépendamment 2 mg de lactose et 2 mg d'amidon de maïs.

Bien que les moyens de mesure des résultats ne soient pas totalement optimisés, les résultats non limitatifs suivants ont été obtenus :
- le lactose a été dosé à 2 mg avec une précision de +/- 0,07 mg pour 85 % des mesures, et avec une précision de +/- 0,1 mg pour 100 % des mesures ;
- l'amidon de maïs a été dosé à 2 mg avec une précision de +/- 0,15 mg pour plus de 90 % des mesures

Par ailleurs, on a évalué à 30% le gain de temps par rapport à l'utilisation des dispositifs antérieurs.

## Revendications

1. Bouchon doseur de poudres (1), comprenant un corps (3) ayant une première face d'extrémité (4) adaptée pour être mise en communication avec un récipient à poudre (10), une seconde face d'extrémité (5) délimitant avec la première face d'extrémité (4) au moins une trémie (6) évasée vers la première face d'extrémité (4), la trémie (6) alimentant au moins une vis sans fin (7), et au moins une ouverture de distribution (12) de la poudre à doser, **caractérisé en ce que** l'ouverture (12) est positionnée sur la seconde face d'extrémité (5) en communication avec la vis sans fin (7).

2. Bouchon doseur de poudres (1) selon la revendication 1 dans lequel l'ouverture (12) a une forme de triangle, de quadrilatère, de cercle ou d'ellipse.

3. Bouchon doseur de poudres (1) selon l'une quelconque des revendications 1 et 2 dans lequel l'ouverture (12) est en forme de triangle, centré sur l'axe de la vis sans fin (7), et ayant un angle s'ouvrant dans le sens de distribution de la vis sans fin (7).

4. Bouchon doseur de poudres (1) selon l'une quelconque des revendications 1 à 3, dans lequel l'ouverture (12) est réalisée dans une épaisseur moindre que la pleine épaisseur de la seconde surface d'extrémité (5), vers l'intérieur du bouchon (1).

5. Bouchon doseur de poudre (1) selon l'une quelconque des revendications 1 à 4, comprenant un moyen d'obturation de tout ou partie de l'ouverture (12) permettant la modification de la surface de ladite ouverture (12).

6. Bouchon doseur de poudre (1) selon la revendication 5, dans lequel le moyen d'obturation comprend au moins un élément recouvrant tout ou partie de la seconde face d'extrémité (5), le dit élément étant mobile par rapport la seconde face d'extrémité (5) et comprenant un trou traversant pouvant être mis en regard de l'ouverture (12).

7. Bouchon doseur de poudre (1) selon la revendication 6, dans lequel le moyen d'obturation est choisi parmi un obturateur à diaphragme du type appareil photographique, ou encore par un obturateur à tiroir.

8. Bouchon doseur de poudres (1) selon l'une quelconque des revendications 1 à 7 dans lequel la vis sans fin (7) peut fonctionner par mise en rotation dans un sens ou dans le sens inverse.

9. Bouchon doseur de poudres (1) selon l'une quelconque des revendications 1 à 8, dans lequel la vis sans fin (7) comprend un organe de transmission (8) adapté pour permettre la mise en rotation de la vis sans fin (7).

10. Bouchon doseur de poudres (1) selon l'une quelconque des revendications 1 à 9 dans lequel la vis sans fin (7) est couplée à un dispositif (14) permettant de faire varier et de contrôler l'angle d'incrément de rotation ou la vitesse de rotation de la vis sans fin (7) par action sur l'organe de transmission (8) d'un mouvement rotatif de la vis et/ou est couplée à un dispositif favorisant la distribution de la poudre.

11. Bouchon doseur de poudres selon l'une quelconque des revendications 1 à 10 comprenant en outre un dispositif favorisant la distribution de la poudre, notamment par vibration ou/et par tapotage du bouchon doseur (1) et/ou du récipient à poudre(10).

12. Bouchon doseur de poudres selon la revendication 11 dans lequel le dispositif favorisant la distribution de la poudre par tapotage est un doigt escamotable.

13. Bouchon doseur de poudres selon la revendication 11 dans lequel le dispositif favorisant la distribution de la poudre par vibration est une fourchette de maintien

14. Bouchon doseur de poudres selon l'une quelconque des revendications 1 à 13 comprenant en outre un agitateur placé à l'intérieur de la trémie.

15. Bouchon doseur de poudres selon la revendication 14 dans lequel l'agitateur est un élément rotatif autour d'un axe sensiblement perpendiculaire à la première et/ou la deuxième face d'extrémité.

16. Bouchon doseur de poudres selon la revendication 15 dans lequel l'agitateur est choisi dans le groupe constitué par une vis sans fin, un foret ou une barre équipée de pales.

17. Bouchon doseur de poudres (1) selon l'une quelconque des revendications 1 à 16 comprenant de plus au moins un dispositif anti-électrostatique, tel qu'une sonde ou pointe ionisante.

18. Bouchon doseur de poudres (1) selon l'une quelconque des revendications 1 à 17 dans lequel les pièces le composant sont en matériau thermiquement stable dans les conditions d'utilisation et de stockage et chimiquement inerte vis à vis des poudres à doser, notamment en matériau polymère tel le polyéthylène, le polypropylène, les polymères fluorés, par exemple le polytétrafluoréthylène (teflon©).

19. Dispositif doseur de poudres (1) comprenant un récipient à poudre (10) mis en communication avec un bouchon doseur (1) selon l'une quelconque des revendications 1 à 18.

20. Utilisation du dispositif doseur de poudres selon la revendication 19, pour le dosage de poudres ayant des masses inférieures à 5 mg, de préférence inférieures à 3 mg, et de préférence encore comprise entre 1 et 2 mg environ, avec une précision de pesée inférieure à 1 mg, de préférence inférieure à 0,5 mg, de préférence encore de l'ordre de 0,1 à 0,2 mg, pour plus de 50 %, de préférence au moins 75 %, de préférence encore au moins 85 % des pesées effectuées.

21. Utilisation du bouchon doseur (1) selon l'une quelconque des revendications 1 à 18 et 20 ou du dispositif selon la revendication 19.

## Claims

1. A powder dosing cap (1), comprising a body (3) having a first end face (4) designed to be brought into communication with a powder container (10), a second end face (5) which, together with the first end face (4), defines at least one feed hopper (6) which widens toward the first end face (4), the feed hopper (6) supplying at least one endless screw (7), and at least one dispensing opening (12) for the powder to be dispensed, **characterized in that** the opening (12) is positioned on the second end face (5) in communication with the endless screw (7).

2. The powder dosing cap (1) as claimed in claim 1, wherein the opening (12) has the shape of a triangle, quadrilateral, circle or ellipse.

3. The powder dosing cap (1) as claimed in either one of claims 1 and 2, wherein the opening (12) has the shape of a triangle centered on the axis of the endless screw (7) and having an angle opening in the direction of dispensing of the endless screw (7).

4. The powder dosing cap (1) as claimed in any one of claims 1 through 3, wherein the opening (12) is formed within a thickness less than the full thickness of the second end surface (5), toward the inside of the cap (1).

5. The powder dosing cap (1) as claimed in any one of claims 1 through 4, comprising a means of closing all or part of the opening (12) in order to permit modification of the surface area of said opening (12).

6. The powder dosing cap (1) as claimed in claim 5, wherein the closure means comprises at least one element covering all or part of the second end face (5), said element being movable relative to the second end face (5) and having a through-hole which can be positioned opposite the opening (12).

7. The powder dosing cap (1) as claimed in claim 6, wherein the closure means is chosen from between a diaphragm shutter of the camera type or a slide shutter.

8. The powder dosing cap (1) as claimed in any one of claims 1 through 7, wherein the endless screw (7) can function by being rotated in one direction or in the opposite direction.

9. The powder dosing cap (1) as claimed in any one of claims 1 through 8, wherein the endless screw (7) comprises a transmission member (8) designed to permit rotation of the endless screw (7).

10. The powder dosing cap (1) as claimed in any one of claims 1 through 9, wherein the endless screw (7) is coupled to a device (14) by means of which it is possible to vary and control the angle of increment of rotation or the speed of rotation of the endless screw (7) by acting on the transmission member (8) giving a rotary movement of the screw and/or is coupled to a device promoting the dispensing of the powder.

11. The powder dosing cap as claimed in any one of claims 1 through 10, further comprising a device promoting the dispensing of the powder, in particular by vibration and/or by tapping of the dosing cap (1) and/or of the powder container (10).

12. The powder dosing cap as claimed in claim 11, wherein the device promoting the dispensing of the powder by tapping is a retractable finger.

13. The powder dosing cap as claimed in claim 11, wherein the device promoting the dispensing of the powder by vibration is a holding fork.

14. The powder dosing cap as claimed in any one of claims 1 through 13, further comprising an agitator placed inside the feed hopper.

15. The powder dosing cap as claimed in claim 14, wherein the agitator is an element rotating about an axis substantially perpendicular to the first and/or second end face.

16. The powder dosing cap as claimed in claim 15, wherein the agitator is selected from the group consisting of an endless screw, a drill, or a rod equipped with vanes.

17. The powder dosing cap (1) as claimed in any one of claims 1 through 16, further comprising at least one antistatic device, such as an ionizing probe or point.

18. The powder dosing cap (1) as claimed in any one of claims 1 through 17, wherein the parts of which it is made up are of a material which is thermally stable under the conditions of use and of storage and chemically inert to the powders to be dosed, in particular of a polymer material such as polyethylene, polypropylene, and fluoropolymers, such as polytetrafluoroethylene (teflon©).

19. A powder dosing device (1) comprising a powder container (10) brought into communication with a dosing cap (1) as claimed in any one of claims 1 through 18.

20. Use of the powder dosing device as claimed in claim 19, for dosing powders having masses of less than 5 mg, preferably of less than 3 mg, and more preferably of between 1 and 2 mg approximately, with a weighing precision below 1 mg, preferably below 0.5 mg, and more preferably of the order of 0.1 to 0.2 mg, for over 50%, preferably at least 75%, more preferably at least 85%, of the weighing operations carried out.

21. Use of the dosing cap (1) as claimed in any one of claims 1 through 18 and 20 or of the device as claimed in claim 19.

## Patentansprüche

1. Pulverdosierverschluss (1), umfassend einen Körper (3) mit einer ersten Stirnfläche (4), welche so ausgestaltet ist, dass sie mit einem Pulverbehälter (10) verbunden werden kann, einer zweiten Stirnfläche (5), welche zusammen mit der ersten Stirnfläche (4) mindestens einen Trichter (6) umgrenzt, welcher sich in Richtung zur ersten Stirnfläche (4) erweitert, wobei der Trichter (6) mindestens eine Endlosschraube (7) speist, und zumindest einer Abgabeöffnung (12) für das zudosierende Pulver, **dadurch gekennzeichnet, dass** die Öffnung (12) an der zweiten Stirnfläche (5) in Verbindung mit der Endlosschraube (7) angeordnet ist.

2. Pulverdosierverschluss (1) nach Anspruch 1, wobei die Öffnung (12) die Form eines Dreiecks, eines Vierecks, eines Kreises oder einer Ellipse aufweist.

3. Pulverdosierverschluss (1) nach einem der Ansprüche 1 oder 2, wobei die Öffnung (12) die Form eines Dreiecks aufweist, welches auf der Achse der Endlosschraube (7) zentriert ist und einen Winkel aufweist, der sich in die Abgaberichtung der Endlosschraube (7) öffnet.

4. Pulverdosierverschluss (1) nach einem der Ansprüche 1 bis 3, wobei die Öffnung (12) in Richtung zur Innenseite des Verschlusses (1) innerhalb einer Dicke ausgebildet ist, die weniger als die volle Dicke der zweiten Stirnfläche (5) beträgt.

5. Pulverdosierverschluss (1) nach einem der Ansprüche 1 bis 4, welcher ein Mittel zum Verschließen der gesamten Öffnung (12) oder eines Teils davon umfasst, um eine Veränderung des Flächeninhalts der besagten Öffnung (12) zu ermöglichen.

6. Pulverdosierverschluss (1) nach Anspruch 5, wobei das Verschlussmittel mindestens ein Element umfasst, das die gesamte zweite Stirnfläche (5) oder einen Teil davon abdeckt, wobei dieses Element gegenüber der zweiten Stirnfläche (5) bewegbar ist und ein Durchgangsloch aufweist, welches gegenüber der Öffnung (12) angeordnet werden kann.

7. Pulverdosierverschluss (1) nach Anspruch 6, wobei das Verschlussmittel aus einen Diaphragma-Verschluss vom Kamera-Typus oder einen Schiebeverschluss ausgewählt ist.

8. Pulverdosierverschluss (1) nach einem der Ansprüche 1 bis 7, wobei die Endlosschraube (7) funktionieren kann, indem sie in eine Richtung oder in die entgegengesetzte Richtung gedreht wird.

9. Pulverdosierverschluss (1) nach einem der Ansprüche 1 bis 8, wobei die Endlosschraube (7) ein Element zur Kraftübertragung (8) umfasst, welches so ausgestaltet ist, dass es ein Drehen der Endlosschraube (7) erlaubt.

10. Pulverdosierverschluss (1) nach einem der Ansprüche 1 bis 9, wobei die Endlosschraube (7) mit einer Vorrichtung (14) gekoppelt ist, die es ermöglicht, den Rotationsschrittwinkel oder die Rotationsgeschwindigkeit der Endlosschraube (7) zu variieren und zu steuern, indem auf das Element zur Kraftübertragung (8) eingewirkt wird, indem der Schraube eine Drehbewegung verliehen wird, und/oder mit einer Vorrichtung zur Förderung der Pulverabgabe gekoppelt ist.

11. Pulverdosierverschluss nach einem der Ansprüche 1 bis 10, welcher weiterhin eine Vorrichtung zur Förderung der Pulverabgabe insbesondere mittels Vibration und/oder Klopfens des Dosierverschlusses (1) und/oder des Pulverbehälters (10) umfasst.

12. Pulverdosierverschluss nach Anspruch 11, wobei die Vorrichtung zur Förderung der Pulverabgabe mittels Klopfens ein zurückziehbarer Finger ist.

13. Pulverdosierverschluss nach Anspruch 11, wobei die Vorrichtung zur Förderung der Pulverabgabe mittels Vibration eine Haltegabel ist.

14. Pulverdosierverschluss nach einem der Ansprüche 1 bis 13, welcher weiterhin ein innerhalb des Trichters angeordnetes Rührwerk umfasst.

15. Pulverdosierverschluss nach Anspruch 14, wobei das Rührwerk ein rotierendes Element ist, welches um eine im Wesentlichen zur ersten und/oder zweiten Stirnfläche rechtwinklige Achse rotiert.

16. Pulverdosierverschluss nach Anspruch 15, wobei das Rührwerk aus der Gruppe, bestehend aus einer Endlosschraube, einem Bohrer oder einem mit Schaufeln ausgestatteten Stab, ausgewählt ist.

17. Pulverdosierverschluss (1) nach einem der Ansprüche 1 bis 16, welcher zusätzlich mindestens eine Antistatikvorrichtung wie z.B. eine Ionisationssonde oder -spitze umfasst.

18. Pulverdosierverschluss (1) nach einem der Ansprüche 1 bis 17, wobei die Teile, aus denen dieser besteht, aus einem Material bestehen, welches unter den Verwendungs- und Lagerungsbedingungen thermisch stabil und gegenüber den zu dosierenden Pulvern chemisch inert ist, insbesondere aus einem Polymermaterial wie z.B. Polyethylen, Polypropylen und Fluorpolymeren wie z.B. Polytetrafluorethylen (Teflon®).

19. Pulverdosiervorrichtung (1), umfassend einen Pulverbehälter (10), welcher mit einem Dosierverschluss (1) nach einem der Ansprüche 1 bis 18 verbunden ist.

20. Verwendung der Pulverdosiervorrichtung nach Anspruch 19 zum Dosieren von Pulvern einer Masse von weniger als 5 mg, vorzugsweise weniger als 3 mg und weiter bevorzugt von zwischen ca. 1 und 2 mg bei einer Wägegenauigkeit von unter 1 mg, vorzugsweise unter 0,5 mg und weiter bevorzugt im Bereich von 0,1 bis 0,2 mg bei mehr als 50 %, vorzugsweise mindestens 75 % und weiter bevorzugt mindestens 85 % der durchgeführten Wägevorgänge.

21. Verwendung des Dosierverschlusses (1) nach einem der Ansprüche 1 bis 18 und 20 oder der Vorrichtung nach Anspruch 19.
